# EUROPEAN PATENT APPLICATION

(11) **EP 4 592 553 A1**
(43) Date of publication of application: **30.07.2025**
(21) Application number: 23867835.3
(22) Date of filing: 14.06.2023
(51) Int. Cl.: F16H 3/66

(54) **UNIT**

(30) Priority: 22.09.2022 JP 2022151274
(71) Applicant: Jatco Ltd., Shizuoka 417-8585 (JP)
(72) Inventor: KAMIYAMA, Akira, Fuji-shi, Shizuoka 417-8585 (JP); WATANABE, Kenichi, Fuji-shi, Shizuoka 417-8585 (JP); HIROSE, Ikuo, Fuji-shi, Shizuoka 417-8585 (JP)
(74) Representative: Hoefer & Partner Patentanwälte mbB
(86) International application number: PCT/JP2023/022047
(87) International publication number: WO 2024/062707

(57) **Abstract**

[PROBLEMS] In a unit having a power transmission mechanism therein, a step ratio at the time of shifting is reduced.

[SOLUTIONS] Provided is a unit including: an input element; an output element; and a gear device which is implemented by coupling respective rotational elements of a first planetary gear mechanism and a second planetary gear mechanism at one place and in which, on an alignment chart, a second rotational part is disposed between a first rotational part and a third rotational part which are the coupled rotational elements, and a fifth rotational part is disposed between the first rotational part and a fourth rotational part, in which the input element is connected to the first rotational part, the output element is connected to the fifth rotational part, the third rotational part is fixed, the fourth rotational part is selectively connectable to a fixed element or the second rotational part, and any specific two among the first rotational part, the fourth rotational part, and the fifth rotational part are connectable and disconnectable with respect to each other.

## Description

### TECHNICAL FIELD

The present invention relates to a unit having a power transmission mechanism therein.

### BACKGROUND ART

Patent Document 1 discloses an automatic transmission unit for an electric vehicle with two forward speeds. In the unit, by switching engaged states of two friction clutches, it is possible to implement a first speed and a second speed having a lower transmission gear ratio (= input rotation speed/output rotation speed) than that at the first speed.

Similar units are disclosed in Patent Documents 2 to 4.

### PRIOR ART DOCUMENT

### PATENT DOCUMENT

Patent Document 1: German Patent Application Publication No. 102019116360
Patent Document 2: German Patent Application Publication No. 102019119951
Patent Document 3: CN106195194A
Patent Document 4: CN206000959U

### SUMMARY OF INVENTION

### PROBLEM TO BE SOLVED BY THE INVENTION

In the automatic transmission unit for an electric vehicle with two forward speeds, a torque amplification effect due to deceleration becomes higher as the transmission gear ratio at the first speed is increased, so that a maximum torque of a motor can be reduced as the transmission gear ratio at the first speed is increased, and a motor having a small size can be selected. On the other hand, the smaller the transmission gear ratio at the second speed, the lower a rotation speed of the motor at the time of implementing a certain vehicle speed, which is advantageous during high-speed cruising.

However, when the transmission gear ratios at the first speed and the second speed are respectively set based on the above design concept, a step ratio (= transmission gear ratio at first speed/transmission gear ratio at second speed) at the time of switching between the first speed and the second speed is increased, and a shift shock is increased.

The present invention has been made in view of such technical problems, and an object of the present invention is to reduce a step ratio at the time of shifting in a unit having a power transmission mechanism therein.

### MEANS FOR SOLVING THE PROBLEM

According to an aspect of the present invention, there is provided a unit including:
an input element;
an output element; and
a gear device which is implemented by coupling respective rotational elements of a first planetary gear mechanism and a second planetary gear mechanism at one place and in which, on an alignment chart, a second rotational part is disposed between a first rotational part and a third rotational part which are the coupled rotational elements, and a fifth rotational part is disposed between the first rotational part and a fourth rotational part, in which
the input element is connected to the first rotational part,
the output element is connected to the fifth rotational part,
the third rotational part is fixed,
the fourth rotational part is selectively connectable to a fixed element or the second rotational part, and
any specific two among the first rotational part, the fourth rotational part, and the fifth rotational part are connectable and disconnectable with respect to each other.

### EFFECT OF THE INVENTION

According to the above aspect, two gear positions can be implemented by switching a connection destination of the fourth rotational part. In addition, by connecting any specific two among the first rotational part, the fourth rotational part, and the fifth rotational part with respect to each other, the first rotational part, the fourth rotational part, and the fifth rotational part can be integrally rotated, and the gear position at the transmission gear ratio of 1 can be implemented. That is, three gear positions can be implemented. Since the step ratio is reduced, an appropriate transmission gear ratio can be set according to a speed range. Since the transmission gear ratio is 1 at a third speed, the power transmission loss caused by differential rotation among the rotational parts can be reduced.

### BRIEF DESCRIPTION OF DRAWINGS

[FIG. 1] FIG. 1 is a skeleton diagram of a unit according to an embodiment of the present invention.
[FIG. 2] FIG. 2 is an engagement table showing engaged states of respective engagement elements at respective gear positions.
[FIG. 3] FIG. 3 is an alignment chart of the unit.
[FIG. 4] FIG. 4 is a skeleton diagram of a modification.
[FIG. 5A] FIG. 5A is a skeleton diagram of a modification.
[FIG. 5B] FIG. 5B is an alignment chart of the modification.
[FIG. 6A] FIG. 6A is a skeleton diagram of a modification.
[FIG. 6B] FIG. 6B is an alignment chart of the modification.
[FIG. 7A] FIG. 7A is a skeleton diagram of a modification.
[FIG. 7B] FIG. 7B is an alignment chart of the modification.

### DESCRIPTION OF EMBODIMENTS

Hereinafter, embodiments of the present invention will be described with reference to the accompanying drawings. Definitions of terms used in the present description are as follows.

The term of "unit" means a general device having a power transmission mechanism such as a gear mechanism and a differential gear mechanism therein, and includes a motor unit having a motor and a power transmission mechanism, an automatic transmission unit, a reducer unit, and the like.

The term of "transmission gear ratio" is a value obtained by dividing an input rotation speed of the unit by an output rotation speed thereof. The term of "input rotation" includes not only rotation input to the unit from a power source outside the unit but also rotation input to the unit from a power source inside the unit.

The term of "step ratio" is a value obtained by dividing a larger transmission gear ratio (for low speed) by a smaller transmission gear ratio (for high speed) with respect to two transmission gear ratios implemented by the unit.

The term of "axial direction" means an axial direction of a rotating shaft of a component constituting the unit. The component is a motor, a gear mechanism, a differential gear mechanism, or the like. The term of "radial direction" means a radial direction from a central axis of the rotating shaft.

The term of "housing" means an accommodation body that accommodates a motor, an inverter, and a power transmission mechanism, and includes one or more cases. An aspect in which a case that accommodates the motor, a case that accommodates the inverter, and a case that accommodates the power transmission mechanism are integrally formed is called "3-in-1".

The term of "motor" means a rotating electrical machine having an electric motor function, and may have a generator function in addition to the electric motor function.

The expression of "an element A is connected to an element B" means that the element A is connected to the element B on an upstream or downstream side in such a manner that power can be transmitted between the element A and the element B. An input side of the power is the upstream side, and an output side of the power is the downstream side. The element A is not limited to be connected to the element B directly or via another member, and may be connected to the element B via a clutch or the like.

The expression of "the element A is coupled to the element B" means a state in which the element A and the element B are directly coupled to each other or indirectly coupled to each other via another member, and the element A and the element B are integrated. In other words, it can be said to be a state in which the element A and the element B rotate integrally. In addition, the expression means a state in which the element A and the element B are connected to each other without a brake or a clutch interposed therebetween, and can be said to be a state in which the element A and the element B are always connected to each other.

The expression of "the element A is fixed to the element B" includes both an aspect in which the element A is directly fixed to the element B and an aspect in which the element A is fixed to the element B via an element C other than the elements A and B. The expression of "the element A is fixed" means that the element A is fixed to another element and is in a non-rotatable state.

The expression of "the element A and the element B overlap each other when viewed in a predetermined direction" refers to a state in which the element A and the element B are arranged in the predetermined direction (axial direction, radial direction, gravity direction, or the like), and the element A and the element B at least partially overlap each other when observed from the predetermined direction. This is synonymous with the expression of "the element A and the element B overlap in the predetermined direction". In a case where the element A and the element B overlap each other when viewed in the axial direction, the element A and the element B are coaxial. In a case where the element A and the element B are drawn so as to be arranged in the predetermined direction in the drawings, it means that the element A and the element B overlap each other when viewed in the predetermined direction.

On the other hand, the expression of "the element A and the element B do not overlap each other when viewed in the predetermined direction" refers to a state in which the element A and the element B are not arranged in the predetermined direction (axial direction, radial direction, gravity direction, vehicle traveling direction, or the like) and there is no portion at which the element A and the element B overlap each other when viewed from the predetermined direction. This is synonymous with the expression of "the element A and the element B do not overlap each other in the predetermined direction". In a case where the element A and the element B are drawn so as not to be arranged in the predetermined direction in the drawings, it means that the element A and the element B do not overlap each other when viewed in the predetermined direction.

The expression of "the element A is disposed between the element B and the element C when viewed in the predetermined direction" means that the element A is observed to be between the element B and the element C when observed from the predetermined direction (axial direction, radial direction, gravity direction, or the like). For example, in a case where the element B, the element A, and the element C are arranged in this order along the axial direction, it is observed that the element A is located between the element B and the element C when viewed in the radial direction, so that it can be said that the element A is located between the element B and the element C. The element A does not need to overlap the elements B and C when viewed in the axial direction. In a case where the element A is drawn between the element B and the element C in the drawings, it means that the element A is located between the element B and the element C when viewed in the predetermined direction.

The expression of "the element A is disposed axially outward of the element B" means that the element A is disposed on one side in the axial direction or the other side in the axial direction of the element B, and includes a case where the element A and the element B overlap each other when viewed in the axial direction, and a case where the element A and the element B have different positions in the radial direction and the element A and the element B do not overlap each other.

The expression of "the element A is disposed radially outward (or radially inward) of the element B" means that a radial position of the element A is located outward (or inward) of a radial position of the element B, and includes a case where the element A and the element B overlap each other when viewed in the radial direction, and a case where the element A and the element B have different positions in the axial direction and the element A and the element B do not overlap each other.

The expression of "disposed close to each other" means a state in which there is a portion where two elements overlap each other when viewed in the axial direction or the radial direction, and no other element is sandwiched between the two elements. For example, the expression of "two engagement elements are disposed close to each other" means that no planetary gear mechanism or the like is disposed between the two engagement elements. In a case where no other element is drawn between the element A and the element B in the drawings, it means that the element A and the element B are disposed close to each other.

The terms of "one side of the engagement element" and "the other side of the engagement element" mean two elements included in the engagement element that become relatively non-rotatable when the engagement element is in an engaged state and become relatively rotatable when the engagement element is in a released state. The terms of "one side of the engagement element" and "the other side of the engagement element" may be a combination of rotational elements or a combination of a rotational element and a non-rotational element, and are generally referred to as a clutch for the former and a brake for the latter. Further, the term of "a single side of the engagement element" means either of "one side of the engagement element" and "the other side of the engagement element".

Other terms are appropriately defined in the description.

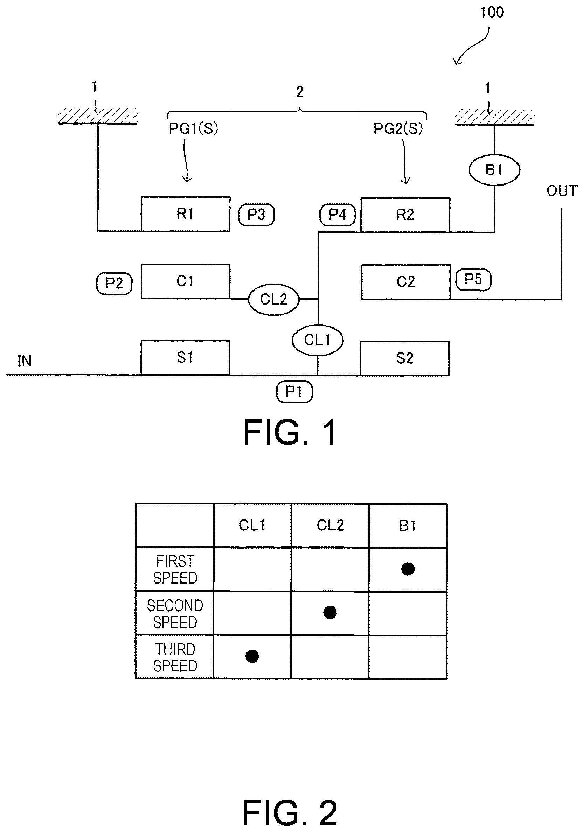

FIG. 1 is a skeleton diagram illustrating a basic structure of a unit 100 according to an embodiment of the present invention. The unit 100 is an automatic transmission unit with three forward speeds for an electric vehicle that shifts rotation input to an input element IN from a motor (not illustrated) as a power source at a transmission gear ratio corresponding to a gear position and transmits the shifted rotation from an output element OUT to a drive wheel (not illustrated). The input element IN and the output element OUT are implemented by gears, rotating shafts, and the like, respectively. Since the motor can switch between forward rotation and reverse rotation, the unit 100 is clearly different in design concept from a unit for a vehicle using an internal combustion engine as a power source in that the unit 100 does not have a reverse gear.

The unit 100 is a so-called 3-in-1 unit in which the input element IN, a gear device 2, first to third engagement elements CL1, CL2, and B1, the output element OUT, the motor (not illustrated), and an inverter (not illustrated) are accommodated in a housing 1. The housing 1 is non-rotatably fixed to the vehicle.

One end of the input element IN is connected to an output shaft of the motor, and the input element IN rotates by power input from the motor. A rotation speed of the input element IN is an input rotation speed of the unit 100. The motor is electrically connected to a battery (not illustrated) outside the unit 100 via the inverter, and functions as an electric motor by receiving power supply from the battery. The motor can also function as a generator.

The gear device 2 is implemented by coupling respective rotational elements of the first planetary gear mechanism PG1 and the second planetary gear mechanism PG2 at one place.

The first planetary gear mechanism PG1 is a single pinion planetary gear mechanism including a first sun gear S1 as a first rotational element, a plurality of first pinion gears (not illustrated), a first carrier C1 as a second rotational element that rotatably supports the plurality of first pinion gears, and a first ring gear R1 as a third rotational element. The first sun gear S1 meshes with the plurality of first pinion gears, and the plurality of first pinion gears mesh with the first ring gear R1.

The second planetary gear mechanism PG2 is a single pinion planetary gear mechanism including a second sun gear S2 as a sixth rotational element, a plurality of second pinion gears (not illustrated), a second carrier C2 as a fifth rotational element that rotatably supports the plurality of second pinion gears, and a second ring gear R2 as a fourth rotational element. The second sun gear S2 meshes with the plurality of second pinion gears, and the plurality of second pinion gears mesh with the second ring gear R2.

S in parentheses next to each of reference numerals PG1 and PG2 indicates that the planetary gear mechanism is a single pinion planetary gear mechanism. When the planetary gear mechanism is a double pinion planetary gear mechanism, D in parentheses is attached next to each of PG1 and PG2.

The first sun gear S1 is coupled to the second sun gear S2. By coupling the first planetary gear mechanism PG1 and the second planetary gear mechanism PG2 at one place in this manner, a first rotational part P1 is implemented by the first sun gear S1 and the second sun gear S2, a second rotational part P2 is implemented by the first carrier C1, a third rotational part P3 is implemented by the first ring gear R1, a fourth rotational part P4 is implemented by the second ring gear R2, and a fifth rotational part P5 is implemented by the second carrier C2.

The first rotational part P1 is connected to the input element IN. The fifth rotational part P5 is connected to the output element OUT. The third rotational part P3 is fixed to the housing 1 as a fixed element.

A rotation speed of the output element OUT is an output rotation speed of the unit 100.

The first engagement element CL1 is a hydraulic clutch or an electric clutch. In a case where two portions of the first engagement element CL1 to be engaged when the first engagement element CL1 is in an engaged state are defined as one side and the other side, the one side is connected to the fourth rotational part P4 implemented by the second ring gear R2, and the other side is connected to the first rotational part P1 implemented by the first sun gear S1 and the second sun gear S2. As a result, when the first engagement element CL1 is engaged, the fourth rotational part P4 implemented by the second ring gear R2 can be connected to the first rotational part P1 implemented by the first sun gear S1 and the second sun gear S2.

The second engagement element CL2 is a hydraulic clutch or an electric clutch. In a case where two portions of the second engagement element CL2 to be engaged when the second engagement element CL2 is in an engaged state are defined as one side and the other side, the one side is connected to the second rotational part P2 implemented by the first carrier C1, and the other side is connected to the fourth rotational part P4 implemented by the second ring gear R2. As a result, when the second engagement element CL2 is engaged, the fourth rotational part P4 implemented by the second ring gear R2 can be connected to the second rotational part P2 implemented by the first carrier C1.

In this disposition, the first engagement element CL1 and the second engagement element CL2 are disposed between the first planetary gear mechanism PG1 and the second planetary gear mechanism PG2, so that a hydraulic actuator that supplies a hydraulic pressure from a control valve unit with less layout restriction is preferably used as an actuator that drives the first engagement element CL1 and an actuator that drives the second engagement element CL2.

The one side of the first engagement element CL1 and the other side of the second engagement element CL2 are connected to the fourth rotational part P4 and rotate integrally with each other, so that these elements can be commonly used, that is, implemented as an integrated component. For example, when each of the first engagement element CL1 and the second engagement element CL2 is implemented by a multi-plate clutch in which a plurality of friction plates are disposed between a drum and a hub, the first engagement element CL1 and the second engagement element CL2 may be implemented as an integrated component by forming the hub (of one element) on an outer periphery of the drum (of the other element). Accordingly, the number of components of the unit 100 can be reduced.

The third engagement element B1 is a hydraulic brake or an electric brake. In a case where two portions of the third engagement element B1 to be engaged when the third engagement element B1 is in the engaged state are defined as one side and the other side, the one side is connected to the fourth rotational part P4 implemented by the second ring gear R2, and the other side is fixed to the housing 1. As a result, when the third engagement element B1 is engaged, the fourth rotational part P4 implemented by the second ring gear R2 can be fixed to the housing 1.

As the third engagement element B1, either of an actuator that is less susceptible to the layout restriction and an actuator that is susceptible to the layout restriction can be adopted.

The third engagement element B1 may be implemented by a selectable one-way clutch. The selectable one-way clutch is a clutch that is implemented by a pair of ratchet mechanisms capable of switching an operation state by an electric actuator and restrict rotation in different directions, and that enters a one-way clutch state when only one of the pair of ratchet mechanisms is caused to operate, and enters an engaged state when both of the pair of ratchet mechanisms are caused to operate.

By engaging one of the second engagement element CL2 and the third engagement element B1 and releasing the other element, it is possible to selectively connect the fourth rotational part P4 implemented by the second ring gear R2 to the housing 1 as a fixed element, or to the second rotational part P2 implemented by the first carrier C1. By changing the engaged state (engagement/release) of the first engagement element CL1, the first rotational part P1 implemented by the first sun gear S1 and the second sun gear S2 and the fourth rotational part P4 implemented by the second ring gear R2 can be switched to a disconnected state where the rotational parts are disconnected from each other or a connected state where the rotational parts are connected to each other. That is, the first rotational part P1 and the fourth rotational part P4 are connectable or disconnectable with respect to each other.

When viewed in the axial direction, the first to third engagement elements CL1, CL2, and B1 may overlap the gear device 2. When these elements are overlapped, the dimension of the unit 100 in the radial direction can be reduced.

FIG. 2 is an engagement table showing relations between the engaged states of the first to third engagement elements CL1, CL2, and B1 and gear positions implemented in the unit 100. In the table, a filled circle indicates an engaged state, and no mark indicates a released state.

As shown in the engagement table, a first speed is implemented by engaging the third engagement element B1 and releasing the first engagement element CL1 and the second engagement element CL2. A second speed is implemented by engaging the second engagement element CL2 and releasing the first engagement element CL1 and the third engagement element B1. A third speed is implemented by engaging the first engagement element CL1 and releasing the second engagement element CL2 and the third engagement element B1.

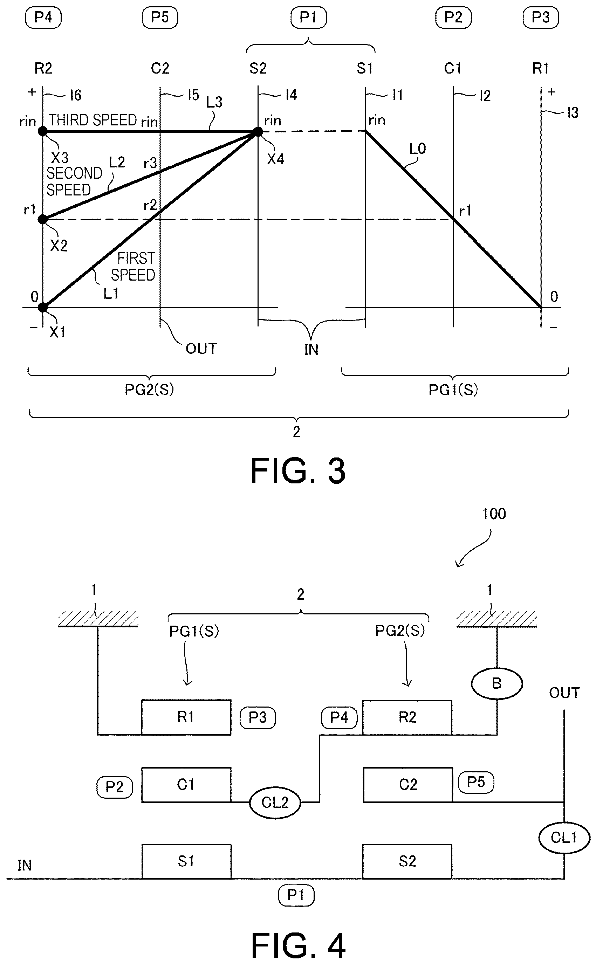

FIG. 3 is an alignment chart of the unit 100. On the alignment chart, the second rotational part P2 is disposed between the first rotational part P1 and the third rotational part P3, and the fifth rotational part P5 is disposed between the first rotational part P1 and the fourth rotational part P4.

Three vertical lines 11 to l3 of the first planetary gear mechanism PG1 indicate, in order from a left side, the first sun gear S1 constituting the first rotational part P1, the first carrier C1 constituting the second rotational part P2, and the first ring gear R1 constituting the third rotational part P3. Three vertical lines 14 to l6 of the second planetary gear mechanism PG2 indicate, in order from a right side, the second sun gear S2 constituting the first rotational part P1, the second carrier C2 constituting the fifth rotational part P5, and the second ring gear R2 constituting the fourth rotational part P4. In FIG. 3, the vertical line 11 corresponding to the first sun gear S1 and the vertical line l4 corresponding to the second sun gear S2 are illustrated for easy understanding. However, since the first sun gear S1 and the second sun gear S2 are coupled to each other, the vertical line l1 and the vertical line l4 are actually the same vertical line.

Since the first planetary gear mechanism PG1 is a single pinion planetary gear mechanism, the first carrier C1 is disposed between the first sun gear S1 and the first ring gear R1. Since the second planetary gear mechanism PG2 is also a single pinion planetary gear mechanism, the second carrier C2 is disposed between the second sun gear S2 and the second ring gear R2.

Since the input element IN is connected to the first rotational part P1, the vertical lines l1 and l4 correspond to the input element IN. As indicated by a broken line in FIG. 3, the rotation speed of the first sun gear S1 and the rotation speed of the second sun gear S2 are equal to each other, so that when the rotation speed of the input element IN is defined as rin, both the rotation speed of the first sun gear S1 and the rotation speed of the second sun gear S2 are rin.

Since the output element OUT is connected to the fifth rotational part P5, the vertical line 15 corresponds to the output element OUT.

A straight line L0 indicates rotation speeds of the respective rotational parts P1 to P3 in the first planetary gear mechanism PG1. Since the input element IN is connected to the first rotational part P1 and the third rotational part P3 is fixed, when the rotation speed of the input element IN is defined as rin, the rotation speed of the second rotational part P2 is r1 which is a vertical coordinate of an intersection of the straight line L0 and the vertical line 12. Intervals between the respective vertical lines of the first planetary gear mechanism PG1 are determined according to a gear ratio of the first planetary gear mechanism PG1 (number of teeth of first sun gear S1/number of teeth of first ring gear R1).

Straight lines L1 to L3 indicate rotation speeds of the respective rotational parts P1, P4, and P5 in the second planetary gear mechanism PG2, and correspond to respective gear positions. The rotation speeds of the respective rotational parts P1, P4, and P5 at the respective gear positions are represented by vertical coordinates of intersections of the straight lines L1 to L3 corresponding to the respective gear positions and the vertical lines 14 to 16. Intervals between the respective vertical lines of the second planetary gear mechanism PG2 are determined according to a gear ratio of the second planetary gear mechanism PG2 (number of teeth of second sun gear S2/number of teeth of second ring gear R2).

At the first speed, the third engagement element B1 is engaged, and the first engagement element CL1 and the second engagement element CL2 are released. As a result, the rotation speed of the fourth rotational part P4 becomes zero, so that when the rotation speed of the input element IN is defined as rin, the straight line L1 corresponding to the first speed is a straight line passing through a point X1 (rotation speed of zero) and a point X4 (rotation speed of rin). The rotation speed of the output element OUT is r2 which is a vertical coordinate of an intersection of the straight line L1 and the vertical line 15. Therefore, a transmission gear ratio at the first speed is rin/r2.

At the second speed, the second engagement element CL2 is engaged, and the first engagement element CL1 and the third engagement element B1 are released. As a result, as indicated by a dot-dashed line in FIG. 3, the rotation speeds of the fourth rotational part P4 and the second rotational part P2 are equal to each other, so that when the rotation speed of the input element IN is defined as rin, the straight line L2 corresponding to the second speed is a straight line passing through a point X2 (rotation speed of r1) and the point X4 (rotation speed of rin). The rotation speed of the output element OUT is r3 which is a vertical coordinate of an intersection of the straight line L2 and the vertical line 15. Therefore, the transmission gear ratio at the second speed is rin/r3. Since r3 is larger than r2, the transmission gear ratio at the second speed is smaller than the transmission gear ratio at the first speed.

At the third speed, the first engagement element CL1 is engaged, and the second engagement element CL2 and the third engagement element B1 are released. As a result, the rotation speeds of the first rotational part P1, the fourth rotational part P4, and the fifth rotational part P5 are equal to one another, so that when the rotation speed of the input element IN is defined as rin, the straight line L3 corresponding to the third speed is a straight line having an inclination of zero and passing through a point X3 (rotation speed of rin) and the point X4 (rotation speed of rin). Since the rotation speeds of the input element IN and the output element OUT are equal to each other, a transmission gear ratio at the third speed is 1, which is smaller than the transmission gear ratios at the first speed and the second speed.

Since the unit 100 according to the present embodiment has a configuration in which the second rotational part P2 is separated from the second planetary gear mechanism PG2, two gear positions (first speed and second speed) can be implemented by selectively switching a connection destination of the fourth rotational part P4 to the second rotational part P2 or the housing 1. Further, in a state where the second rotational part P2 is separated from the second planetary gear mechanism PG2, the rotational parts P1, P4, and P5 of the second planetary gear mechanism PG2 can be integrally rotated, so that the gear position (third speed) at the transmission gear ratio of 1 can be implemented.

As described above, in the unit 100, since three gear positions can be implemented, a step ratio thereof is smaller than that in a unit having two forward speeds, and a shock at the time of shifting can be suppressed to be smaller than that in a unit having two forward speeds. In addition, since the first to third speeds can be used for low speed, medium speed, and high speed, respectively, an appropriate transmission gear ratio can be set according to a speed range.

That is, since at the third speed, all the rotational parts P1, P4, and P5 constituting the second planetary gear mechanism PG2 rotate at the same rotation speed, it is possible to reduce the power transmission loss caused by the differential rotation among the rotational parts. In the present embodiment, the rotational parts P1 and P4 are two specific rotational parts that are connectable and disconnectable by the first engagement element CL1. However, the specific two rotational parts that are connectable and disconnectable by the first engagement element CL1 may be the rotational parts P1 and P5 or the rotational parts P4 and P5. By connecting any two of the rotational parts P1, P4, and P5 constituting the second planetary gear mechanism PG2 by the first engagement element CL1, the rotational parts P1, P4, and P5 can be rotated at the same rotation speed.

In the present embodiment, the second speed, which is the intermediate gear position, can be implemented by combining the second planetary gear mechanism PG2 that implements two gear positions with one planetary gear mechanism with the first planetary gear mechanism PG1 in which the first sun gear S1 as the first rotational element is coupled to the second sun gear S2 as the sixth rotational element and the first ring gear R1 as the third rotational element is fixed.

Next, modifications of the embodiment of the present invention will be described.

FIG. 4 is a skeleton diagram of the unit 100 according to a modification.

The first planetary gear mechanism PG1 and the second planetary gear mechanism PG2 are single pinion planetary gear mechanisms as in the unit 100 illustrated in FIG. 1.

In the modification of FIG. 4, the first rotational part P1 is implemented by coupling the first sun gear S1 as a first rotational element and the second sun gear S2 as a sixth rotational element, the second rotational part P2 is implemented by the first carrier C1 as a second rotational element, the third rotational part P3 is implemented by the first ring gear R1 as a third rotational element, the fourth rotational part P4 is implemented by the second ring gear R2 as a fourth rotational element, and the fifth rotational part P5 is implemented by the second carrier C2 as a fifth rotational element.

The first rotational part P1 is connected to the input element IN. The fifth rotational part P5 is connected to the output element OUT. The third rotational part P3 is fixed to the housing 1 as a fixed element.

One side of the first engagement element CL1 is connected to the second carrier C2 as the fifth rotational part P5, the other side of the first engagement element CL1 is connected to the first sun gear S1 and the second sun gear S2 as the first rotational part P1, one side of the second engagement element CL2 is connected to the first carrier C1 as the second rotational part P2, the other side of the second engagement element CL2 is connected to the second ring gear R2 as the fourth rotational part P4, one side of the third engagement element B1 is connected to the second ring gear R2 as the fourth rotational part P4, and the other side of the third engagement element B1 is fixed to the housing 1.

In the modification of FIG. 4, the first planetary gear mechanism PG1 is disposed on one side of the second planetary gear mechanism PG2 in the axial direction, and the first engagement element CL1 is disposed on the other side of the second planetary gear mechanism PG2 in the axial direction.

Accordingly, the first planetary gear mechanism PG1 and the second planetary gear mechanism PG2 can be disposed closer to each other than in the case where the first engagement element CL1 and the second engagement element CL2 are disposed between the first planetary gear mechanism PG1 and the second planetary gear mechanism PG2. As a result, the degree of freedom in layout of other elements is increased, and the dimension of the unit 100 in the axial direction can be reduced. The degree of freedom in selecting the actuator used for the first engagement element CL1 can be improved.

When viewed in the axial direction, the first to third engagement elements CL1, CL2, and B1 may overlap the gear device 2. When these elements are overlapped, the dimension of the unit 100 in the radial direction can be reduced.

An engagement table and an alignment chart of the modification of FIG. 4 are the same as those of the skeleton diagram of FIG. 1 illustrated in FIGS. 2 and 3.

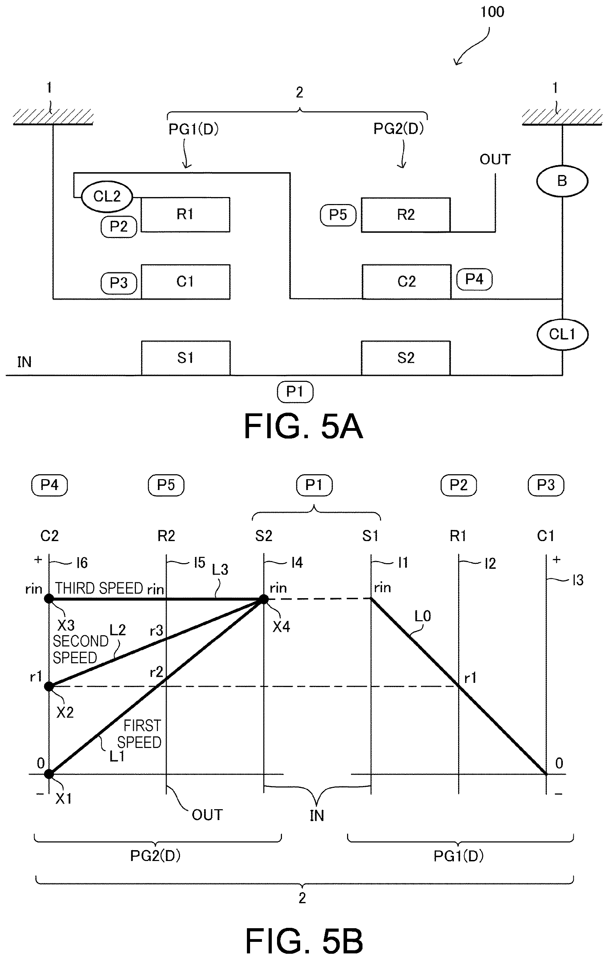

FIG. 5A is a skeleton diagram of the unit 100 according to a modification.

In the modification of FIG. 5A, the first planetary gear mechanism PG1 and the second planetary gear mechanism PG2 are double pinion planetary gear mechanisms, unlike the unit 100 illustrated in FIG. 1. That is, the first carrier C1 includes a plurality of inner pinion gears (not illustrated) that mesh with the first sun gear S1 and a plurality of outer pinion gears (not illustrated) that mesh with the first ring gear R1, and the plurality of inner pinion gears and the plurality of outer pinion gears mesh with each other. The second carrier C2 includes a plurality of inner pinion gears (not illustrated) that mesh with the second sun gear S2 and a plurality of outer pinion gears (not illustrated) that mesh with the second ring gear R2, and the plurality of inner pinion gears and the plurality of outer pinion gears mesh with each other.

In the modification of FIG. 5A, the first rotational part P1 is implemented by coupling the first sun gear S1 as a first rotational element and the second sun gear S2 as a sixth rotational element, the second rotational part P2 is implemented by the first ring gear R1 as a second rotational element, the third rotational part P3 is implemented by the first carrier C1 as a third rotational element, the fourth rotational part P4 is implemented by the second carrier C2 as a fourth rotational element, and the fifth rotational part P5 is implemented by the second ring gear R2 as a fifth rotational element.

The first rotational part P1 is connected to the input element IN. The fifth rotational part P5 is connected to the output element OUT. The third rotational part P3 is fixed to the housing 1 as a fixed element.

One side of the first engagement element CL1 is connected to the second carrier C2 as the fourth rotational part P4, the other side of the first engagement element CL1 is connected to the first sun gear S1 and the second sun gear S2 as the first rotational part P1, one side of the second engagement element CL2 is connected to the first ring gear R1 as the second rotational part P2, the other side of the second engagement element CL2 is connected to the second carrier C2 as the fourth rotational part P4, one side of the third engagement element B1 is connected to the second carrier C2 as the fourth rotational part P4, and the other side of the third engagement element B1 is fixed to the housing 1.

In the modification of FIG. 5A, the first engagement element CL1 is disposed on one side of the first planetary gear mechanism PG1 and the second planetary gear mechanism PG2 in the axial direction, and the second engagement element CL2 is disposed on the other side of the first planetary gear mechanism PG1 and the second planetary gear mechanism PG2 in the axial direction.

Accordingly, the first planetary gear mechanism PG1 and the second planetary gear mechanism PG2 can be disposed close to each other. As a result, the degree of freedom in layout of other elements is increased, and the dimension of the unit 100 in the axial direction can be reduced. The degree of freedom in selecting the actuator used for the first engagement element CL1 and the actuator used for the second engagement element CL2 can be improved.

In addition, the one side of the first engagement element CL1 and the one side of the third engagement element B1 can be commonly used (integrated), whereby the number of components of the unit 100 can be reduced.

When viewed in the axial direction, the first to third engagement elements CL1, CL2, and B1 may overlap the gear device 2. When these elements are overlapped, the dimension of the unit 100 in the radial direction can be reduced.

An engagement table of the modification of FIG. 5A is the same as that of the skeleton diagram of FIG. 1 illustrated in FIG. 2.

FIG. 5B is an alignment chart of the modification of FIG. 5A. Since the first planetary gear mechanism PG1 and the second planetary gear mechanism PG2 are double pinion planetary gear mechanisms, on the alignment chart, the first ring gear R1 is disposed between the first sun gear S1 and the first carrier C1, and the second ring gear R2 is disposed between the second sun gear S2 and the second carrier C2.

That is, three vertical lines l1 to 13 of the first planetary gear mechanism PG1 indicate, in order from a left side, the first sun gear S1 constituting the first rotational part P1, the first ring gear R1 constituting the second rotational part P2, and the first carrier C1 constituting the third rotational part P3. Three vertical lines 14 to l6 of the second planetary gear mechanism PG2 indicate, in order from a right side, the second sun gear S2 constituting the first rotational part P1, the second ring gear R2 constituting the fifth rotational part P5, and the second carrier C2 constituting the fourth rotational part P4.

On the alignment chart of FIG. 5B, rotational elements constituting the first to fifth rotational parts P1 to P5 are different from those illustrated in FIG. 3, but the connection relation between the first to fifth rotational parts P1 to P5 and the first to third engagement elements CL1, CL2, and B1 is the same as that illustrated in FIG. 3, so that the alignment charts are substantially the same.

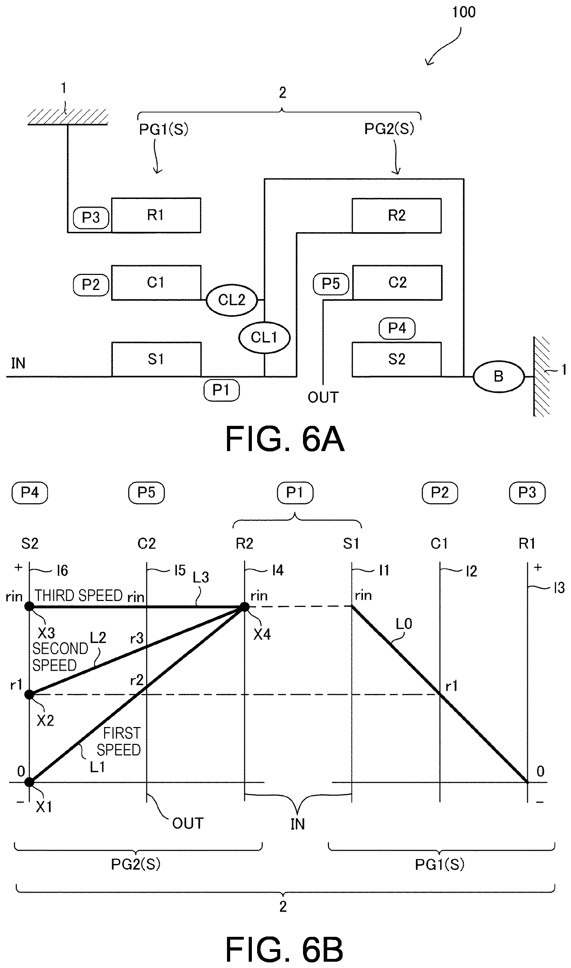

FIG. 6A is a skeleton diagram of the unit 100 according to a modification.

In the modification of FIG. 6A, the first planetary gear mechanism PG1 and the second planetary gear mechanism PG2 are single pinion planetary gear mechanisms as in the unit 100 illustrated in FIG. 1.

In the modification of FIG. 6A, the first rotational part P1 is implemented by coupling the first sun gear S1 as a first rotational element and the second ring gear R2 as a sixth rotational element, the second rotational part P2 is implemented by the first carrier C1 as a second rotational element, the third rotational part P3 is implemented by the first ring gear R1 as a third rotational element, the fourth rotational part P4 is implemented by the second sun gear S2 as a fourth rotational element, and the fifth rotational part P5 is implemented by the second carrier C2 as a fifth rotational element.

The first rotational part P1 is connected to the input element IN. The fifth rotational part P5 is connected to the output element OUT. The third rotational part P3 is fixed to the housing 1 as a fixed element.

One side of the first engagement element CL1 is connected to the second sun gear S2 as the fourth rotational part P4, the other side of the first engagement element CL1 is connected to the first sun gear S1 and the second ring gear R2 as the first rotational part P1, one side of the second engagement element CL2 is connected to the first carrier C1 as the second rotational part P2, the other side of the second engagement element CL2 is connected to the second sun gear S2 as the fourth rotational part P4, one side of the third engagement element B1 is connected to the second sun gear S2 as the fourth rotational part P4, and the other side of the third engagement element B1 is fixed to the housing 1.

In the modification of FIG. 6A, the one side of the first engagement element CL1 and the other side of the second engagement element CL2 can be commonly used (integrated), whereby the number of components of the unit 100 can be reduced. The one side of the third engagement element B1 can also be commonly used (integrated) in addition to the one side of the first engagement element CL1 and the other side of the second engagement element CL2.

When viewed in the axial direction, the first to third engagement elements CL1, CL2, and B1 may overlap the gear device 2. When these elements are overlapped, the dimension of the unit 100 in the radial direction can be reduced.

An engagement table of the modification of FIG. 6A is the same as that of the skeleton diagram of FIG. 1 illustrated in FIG. 2.

FIG. 6B is an alignment chart of the modification of FIG. 6A.

Three vertical lines 11 to l3 of the first planetary gear mechanism PG1 indicate, in order from a left side, the first sun gear S1 constituting the first rotational part P1, the first carrier C1 constituting the second rotational part P2, and the first ring gear R1 constituting the third rotational part P3. Three vertical lines l4 to l6 of the second planetary gear mechanism PG2 indicate, in order from a right side, the second ring gear R2 constituting the first rotational part P1, the second carrier C2 constituting the fifth rotational part P5, and the second sun gear S2 constituting the fourth rotational part P4.

On the alignment chart of FIG. 6B, rotational elements constituting the first to fifth rotational parts P1 to P5 are different from those illustrated in FIG. 3, but a connection relation between the first to fifth rotational parts P1 to P5 and the first to third engagement elements CL1, CL2, and B1 is the same as that illustrated in FIG. 3, so that the alignment charts are substantially the same.

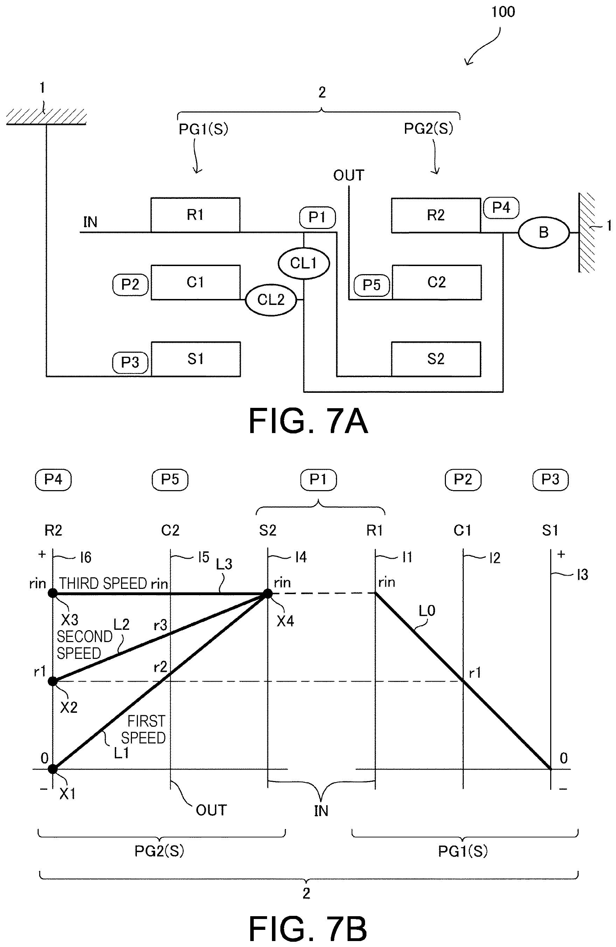

FIG. 7A is a skeleton diagram of the unit 100 according to a modification.

In the modification of FIG. 7A, the first planetary gear mechanism PG1 and the second planetary gear mechanism PG2 are single pinion planetary gear mechanisms as in the unit 100 illustrated in FIG. 1.

In the modification of FIG. 7A, the first rotational part P1 is implemented by coupling the first ring gear R1 as a first rotational element and the second sun gear S2 as a sixth rotational element, the second rotational part P2 is implemented by the first carrier C1 as a second rotational element, the third rotational part P3 is implemented by the first sun gear S1 as a third rotational element, the fourth rotational part P4 is implemented by the second ring gear R2 as a fourth rotational element, and the fifth rotational part P5 is implemented by the second carrier C2 as a fifth rotational element.

The first rotational part P1 is connected to the input element IN. The fifth rotational part P5 is connected to the output element OUT. The third rotational part P3 is fixed to the housing 1 as a fixed element.

One side of the first engagement element CL1 is connected to the second ring gear R2 as the fourth rotational part P4, the other side of the first engagement element CL1 is connected to the first ring gear R1 and the second sun gear S2 as the first rotational part P1, one side of the second engagement element CL2 is connected to the first carrier C1 as the second rotational part P2, the other side of the second engagement element CL2 is connected to the second ring gear R2 as the fourth rotational part P4, one side of the third engagement element B1 is connected to the second ring gear R2 as the fourth rotational part P4, and the other side of the third engagement element B1 is fixed to the housing 1.

In the modification of FIG. 7A, the one side of the first engagement element CL1 and the other side of the second engagement element CL2 can be commonly used (integrated), whereby the number of components of the unit 100 can be reduced. The one side of the third engagement element B1 can also be commonly used (integrated) in addition to the one side of the first engagement element CL1 and the other side of the second engagement element CL2.

When viewed in the axial direction, the first to third engagement elements CL1, CL2, and B1 may overlap the gear device 2. When these elements are overlapped, the dimension of the unit 100 in the radial direction can be reduced.

An engagement table of the modification of FIG. 7A is the same as that of the skeleton diagram of FIG. 1 illustrated in FIG. 2.

FIG. 7B is an alignment chart of the modification of FIG. 7A.

Three vertical lines 11 to l3 of the first planetary gear mechanism PG1 indicate, in order from a left side, the first ring gear R1 constituting the first rotational part P1, the first carrier C1 constituting the second rotational part P2, and the first sun gear S1 constituting the third rotational part P3. Three vertical lines 14 to l6 of the second planetary gear mechanism PG2 indicate, in order from a right side, the second sun gear S2 constituting the first rotational part P1, the second carrier C2 constituting the fifth rotational part P5, and the second ring gear R2 constituting the fourth rotational part P4.

On the alignment chart of FIG. 7B, rotational elements constituting the first to fifth rotational parts P1 to P5 are different from those illustrated in FIG. 3, but a connection relation between the first to fifth rotational parts P1 to P5 and the first to third engagement elements CL1, CL2, and B1 is the same as that illustrated in FIG. 3, so that the alignment charts are substantially the same.

Next, operations and effects of the embodiment of the present invention will be described.
(1) According to the embodiment of the present invention, in the examples illustrated in FIGS. 1, 4, 5A, 6A, and 7A,
   the unit 100 includes
   the input element IN,
   the output element OUT, and
   the gear device 2 (FIGS. 3, 5B, 6B, and 7B) which is implemented by coupling respective rotational elements of the first planetary gear mechanism PG1 and the second planetary gear mechanism PG2 at one place and in which, on an alignment chart, the second rotational part P2 is disposed between the first rotational part P1 and the third rotational part P3 which are the coupled rotational elements, and the fifth rotational part P5 is disposed between the first rotational part P1 and the fourth rotational part P4.

The input element IN is connected to the first rotational part P1.

The output element OUT is connected to the fifth rotational part P5.

The third rotational part P3 is fixed.

The fourth rotational part P4 is selectively connectable to the housing 1 or the second rotational part P2.

Any specific two among the first rotational part P1, the fourth rotational part P4, and the fifth rotational part P5 are connectable and disconnectable with respect to each other.

According to the present embodiment, two gear positions can be implemented by switching a connection destination of the fourth rotational part P4. In addition, by connecting any specific two among the first rotational part P1, the fourth rotational part P4, and the fifth rotational part P5 with respect to each other, the first rotational part P1, the fourth rotational part P4, and the fifth rotational part P5 can be integrally rotated, and the gear position at the transmission gear ratio of 1 can be implemented. That is, three gear positions can be implemented. Since the step ratio is reduced, an appropriate transmission gear ratio can be set according to a speed range. Since the transmission gear ratio is 1 at a third speed, the power transmission loss caused by differential rotation among the rotational parts can be reduced.

(2) The gear device 2 may be implemented as illustrated in FIGS. 1 and 4. In the examples illustrated in FIGS. 1 and 4,
the first planetary gear mechanism PG1 is a single pinion planetary gear mechanism including the first sun gear S1, the first carrier C1, and the first ring gear R1, the first carrier C1 being disposed between the first sun gear S1 and the first ring gear R1 on the alignment chart (FIG. 3).

The second planetary gear mechanism PG2 is a single pinion planetary gear mechanism including the second ring gear R2, the second carrier C2, and the second sun gear S2, the second carrier C2 being disposed between the second ring gear R2 and the second sun gear S2 on the alignment chart (FIG. 3).

The first rotational part P1 is implemented by coupling the first sun gear S1 and the second sun gear S2.

The second rotational part P2 is implemented by the first carrier C1.

The third rotational part P3 is implemented by the first ring gear R1.

The fourth rotational part P4 is implemented by the second ring gear R2.

The fifth rotational part P5 is implemented by the second carrier C2.

The gear device 2 may be implemented as illustrated in FIG. 5A. In the example illustrated in FIG. 5A,
the first planetary gear mechanism PG1 is a double pinion planetary gear mechanism including the first sun gear S1, the first ring gear R1, and the first carrier C1, the first ring gear R1 being disposed between the first sun gear S1 and the first carrier C1 on the alignment chart (FIG. 5B).

The second planetary gear mechanism PG2 is a double pinion planetary gear mechanism including the second carrier C2, the second ring gear R2, and the second sun gear S2, the second ring gear R2 being disposed between the second carrier C2 and the second sun gear S2 on the alignment chart (FIG. 5B).

The first rotational part P1 is implemented by coupling the first sun gear S1 and the second sun gear S2.

The second rotational part P2 is implemented by the first ring gear R1.

The third rotational part P3 is implemented by the first carrier C1.

The fourth rotational part P4 is implemented by the second carrier C2.

The fifth rotational part P5 is implemented by the second ring gear R2.

The gear device 2 may be implemented as illustrated in FIG. 6A. In the example illustrated in FIG. 6A,
the first planetary gear mechanism PG1 is a single pinion planetary gear mechanism including the first sun gear S1, the first carrier C1, and the first ring gear R1, the first carrier C1 being disposed between the first sun gear S1 and the first ring gear R1 on the alignment chart (FIG. 6B).

The second planetary gear mechanism PG2 is a single pinion planetary gear mechanism including the second sun gear S2, the second carrier C2, and the second ring gear R2, the second carrier C2 being disposed between the second sun gear S2 and the second ring gear R2 on the alignment chart (FIG. 6B).

The first rotational part P1 is implemented by coupling the first sun gear S1 and the second ring gear R2.

The second rotational part P2 is implemented by the first carrier C1.

The third rotational part P3 is implemented by the first ring gear R1.

The fourth rotational part P4 is implemented by the second sun gear S2.

The fifth rotational part P5 is implemented by the second carrier C2.

The gear device 2 may be implemented as illustrated in FIG. 7A. In the example illustrated in FIG. 7A,
the first planetary gear mechanism PG1 is a single pinion planetary gear mechanism including the first ring gear R1, the first carrier C1, and the first sun gear S1, the first carrier C1 being disposed between the first ring gear R1 and the first sun gear S1 on the alignment chart (FIG. 7B).

The second planetary gear mechanism PG2 is a single pinion planetary gear mechanism including the second ring gear R2, the second carrier C2, and the second sun gear S2, the second carrier C2 being disposed between the second ring gear R2 and the second sun gear S2 on the alignment chart (FIG. 7B).

The first rotational part P1 is implemented by coupling the first ring gear R1 and the second sun gear S2.

The second rotational part P2 is implemented by the first carrier C1.

The third rotational part P3 is implemented by the first sun gear S1. The fourth rotational part P4 is implemented by the second ring gear R2. The fifth rotational part P5 is implemented by the second carrier C2.

(3) A configuration in which the fourth rotational part P4 is selectively connectable to the housing 1 or the second rotational part P2 and a configuration in which any specific two among the first rotational part P1, the fourth rotational part P4, and the fifth rotational part P5 are connectable and disconnectable with respect to each other can be implemented by the first to third engagement elements CL1, CL2, and B1. In the examples illustrated in FIGS. 1, 5A, 6A, and 7A,
the unit 100 includes
the first engagement element CL1,
the second engagement element CL2, and
the third engagement element B1.

One side of the first engagement element CL1 is connected to the fourth rotational part P4.

The other side of the first engagement element CL1 is connected to the first rotational part P1.

One side of the second engagement element CL2 is connected to the second rotational part P2.

The other side of the second engagement element CL2 is connected to the fourth rotational part P4.

One side of the third engagement element B1 is connected to the fourth rotational part P4.

The other side of the third engagement element B1 is fixed to the housing 1.
(4) In the example of FIG. 5A, the first engagement element CL1 is disposed on one side of the first planetary gear mechanism PG1 and the second planetary gear mechanism PG2 in an axial direction, and the second engagement element CL2 is disposed on the other side of the first planetary gear mechanism PG1 and the second planetary gear mechanism PG2 in the axial direction. Accordingly, the first planetary gear mechanism PG1 and the second planetary gear mechanism PG2 can be disposed close to each other. As a result, the degree of freedom in layout of other elements is increased, and the dimension of the unit 100 in the axial direction can be reduced. The degree of freedom in selecting the actuator used for the first engagement element CL1 and the actuator used for the second engagement element CL2 can be improved.
(5) In the example illustrated in FIG. 5A, the one side of the first engagement element CL1 and the one side of the third engagement element B1 may be implemented as an integrated component. Accordingly, the number of components of the unit 100 can be reduced.
(6) In the examples illustrated in FIGS. 1, 6A, and 7A, the one side of the first engagement element CL1 and the other side of the second engagement element CL2 may be implemented as an integrated component. Accordingly, the number of components of the unit 100 can be reduced.
(7) A configuration in which the fourth rotational part P4 is selectively connectable to the housing 1 or the second rotational part P2 and a configuration in which any specific two among the first rotational part P1, the fourth rotational part P4, and the fifth rotational part P5 are connectable and disconnectable with respect to each other may be the configuration as illustrated in FIG. 4. In the example illustrated in FIG. 4,
   the unit 100 includes
   the first engagement element CL1,
   the second engagement element CL2, and
   the third engagement element B1.

One side of the first engagement element CL1 is connected to the fifth rotational part P5.

The other side of the first engagement element CL1 is connected to the first rotational part P1.

One side of the second engagement element CL2 is connected to the second rotational part P2.

The other side of the second engagement element CL2 is connected to the fourth rotational part P4.

One side of the third engagement element B1 is connected to the fourth rotational part P4.

The other side of the third engagement element B1 is fixed to the housing 1.

(8) In the example illustrated in FIG. 4, the first planetary gear mechanism PG1 is disposed on one side of the second planetary gear mechanism PG2 in an axial direction, and the first engagement element CL1 is disposed on the other side of the second planetary gear mechanism PG2 in the axial direction. Accordingly, the first planetary gear mechanism PG1 and the second planetary gear mechanism PG2 can be disposed closer to each other than in the case where the first engagement element CL1 and the second engagement element CL2 are disposed between the first planetary gear mechanism PG1 and the second planetary gear mechanism PG2. As a result, the degree of freedom in layout of other elements is increased, and the dimension of the unit 100 in the axial direction can be reduced. The degree of freedom in selecting the actuator used for the first engagement element CL1 can be improved.

Although the embodiment of the present invention has been described above, the above embodiment merely exemplifies application examples of the present invention and does not intend to limit the technical scope of the present invention to the specific configurations of the above embodiment.

For example, the skeleton diagrams illustrated in FIGS. 1, 4, 5A, 6A, and 7A are some of the application examples of the present invention, and the skeleton diagram of the unit to which the present invention is applied is not limited thereto.

The first planetary gear mechanism PG1 and the second planetary gear mechanism PG2 may be either a single pinion planetary gear mechanism or a double pinion planetary gear mechanism.

### DESCRIPTION OF REFERENCE SIGNS

1 housing (fixed element)
2 gear device
100 unit
CL1 first engagement element
CL2 second engagement element
B1 third engagement element
S1 first sun gear (first rotational element and third rotational element)
C1 first carrier (second rotational element and third rotational element)
R1 first ring gear (first rotational element, second rotational element, and third rotational element)
S2 second sun gear (fourth rotational element and sixth rotational element)
C2 second carrier (fourth rotational element and fifth rotational element)
R2 second ring gear (fourth rotational element, fifth rotational element, and sixth rotational element)
P1 first rotational part
P2 second rotational part
P3 third rotational part
P4 fourth rotational part
P5 fifth rotational part
IN input element
OUT output element
PG1 first planetary gear mechanism
PG2 second planetary gear mechanism

## Claims

1. A unit comprising:
an input element;
an output element; and
a gear device which is implemented by coupling respective rotational elements of a first planetary gear mechanism and a second planetary gear mechanism at one place and in which, on an alignment chart, a second rotational part is disposed between a first rotational part and a third rotational part which are the coupled rotational elements, and a fifth rotational part is disposed between the first rotational part and a fourth rotational part, wherein
the input element is connected to the first rotational part,
the output element is connected to the fifth rotational part,
the third rotational part is fixed,
the fourth rotational part is selectively connectable to a fixed element or the second rotational part, and
any specific two among the first rotational part, the fourth rotational part, and the fifth rotational part are connectable and disconnectable with respect to each other.

2. The unit according to claim 1, wherein
the first planetary gear mechanism is a planetary gear mechanism including a first rotational element, a second rotational element, and a third rotational element, the second rotational element being disposed between the first rotational element and the third rotational element on the alignment chart,
the second planetary gear mechanism is a planetary gear mechanism including a fourth rotational element, a fifth rotational element, and a sixth rotational element, the fifth rotational element being disposed between the fourth rotational element and the sixth rotational element on the alignment chart,
the first rotational part is implemented by coupling the first rotational element and the sixth rotational element,
the second rotational part is implemented by the second rotational element,
the third rotational part is implemented by the third rotational element,
the fourth rotational part is implemented by the fourth rotational element, and
the fifth rotational part is implemented by the fifth rotational element.

3. The unit according to claim 1 or 2, further comprising:
a first engagement element;
a second engagement element; and
a third engagement element, wherein
one side of the first engagement element is connected to the fourth rotational part,
the other side of the first engagement element is connected to the first rotational part,
one side of the second engagement element is connected to the second rotational part,
the other side of the second engagement element is connected to the fourth rotational part,
one side of the third engagement element is connected to the fourth rotational part, and
the other side of the third engagement element is fixed to the fixed element.

4. The unit according to claim 3, wherein
the first engagement element is disposed on one side of the first planetary gear mechanism and the second planetary gear mechanism in an axial direction, and
the second engagement element is disposed on the other side of the first planetary gear mechanism and the second planetary gear mechanism in the axial direction.

5. The unit according to claim 3, wherein
the one side of the first engagement element and the one side of the third engagement element are implemented as an integrated component.

6. The unit according to claim 3, wherein
the one side of the first engagement element and the other side of the second engagement element are implemented as an integrated component.

7. The unit according to claim 1 or 2, further comprising:
a first engagement element;
a second engagement element; and
a third engagement element, wherein
one side of the first engagement element is connected to the fifth rotational part,
the other side of the first engagement element is connected to the first rotational part,
one side of the second engagement element is connected to the second rotational part,
the other side of the second engagement element is connected to the fourth rotational part,
one side of the third engagement element is connected to the fourth rotational part, and
the other side of the third engagement element is fixed to the fixed element.

8. The unit according to claim 7, wherein
the first planetary gear mechanism is disposed on one side of the second planetary gear mechanism in an axial direction, and
the first engagement element is disposed on the other side of the second planetary gear mechanism in the axial direction.
